Europäisches Patentamt

European Patent Office

Office européen des brevets

(19)

(11) Publication number: **0 201 853**
**A2**

(12) # EUROPEAN PATENT APPLICATION

(21) Application number: **86106210.7**

(22) Date of filing: **06.05.86**

(51) Int. Cl.⁴: **G 01 C 19/64**

(30) Priority: **10.05.85 US 733288**

(43) Date of publication of application:
**20.11.86 Bulletin 86/47**

(84) Designated Contracting States:
**DE FR GB SE**

(71) Applicant: **HONEYWELL INC.**
**Honeywell Plaza**
**Minneapolis Minnesota 55408(US)**

(72) Inventor: **Killpatrick, Joseph**
**2901 32nd Avenue Northeast**
**Minneapolis Minnesota 55418(US)**

(74) Representative: **Herzbach, Dieter et al,**
**Honeywell Europe S.A. Holding KG Patent- und**
**Lizenzabteilung Kaiserleistrasse 55 Postfach 184**
**D-6050 Offenbach am Main(DE)**

(54) **Readout apparatus for a laser angular rate sensor.**

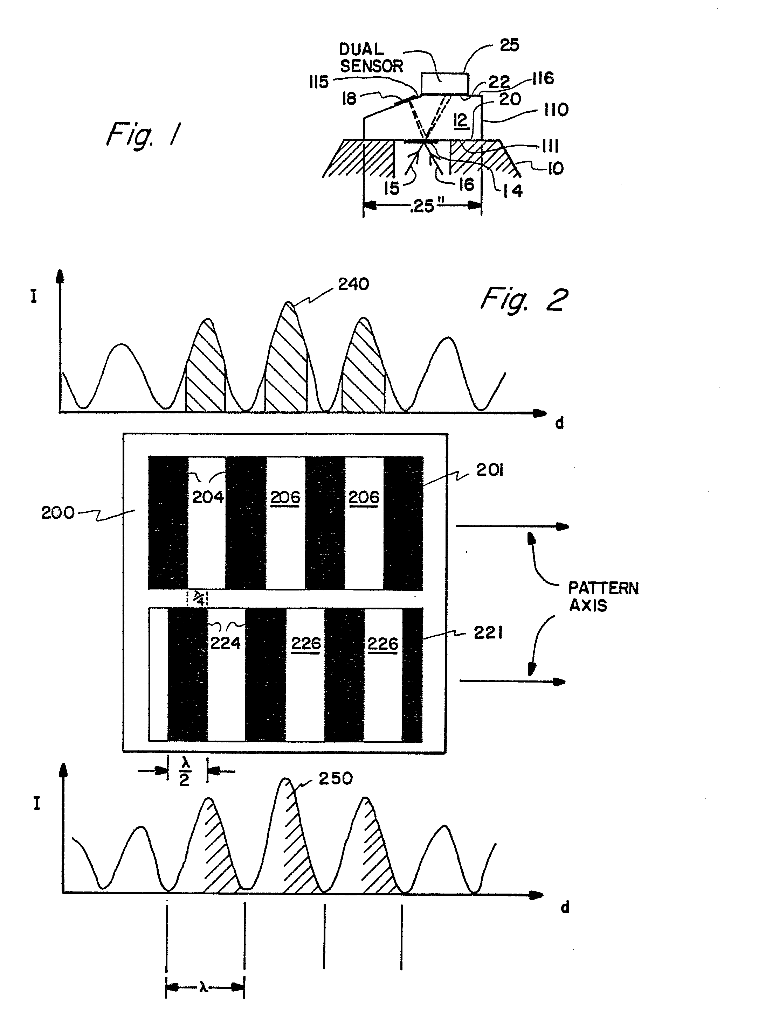

(57) Two electrically isolated photodetectors (201, 221) are responsive to a plurality of the same fringes (240) of a ring laser angular rate sensor (10) interference fringe pattern. The photodetectors have a periodic pattern of photosensitive zones (206, 226). The photosensitive zones of each detector are spatially offset relative to one another so as to produce a pair of output signals out of phase with each other (Figure 2).

Fig. 2

Croydon Printing Company Ltd.

EP 0 201 853 A2

HONEYWELL INC.                    May 5, 1986
Honeywell Plaza                  A4111348 EP
Minneapolis, MN 55440 USA        Hz/ep

READOUT APPARATUS FOR A LASER ANGULAR RATE SENSOR

The present invention relates to a readout apparatus for a laser angular rate sensor according to the preamble of claim 1.

Examples of ring laser angular rate sensors are shown and described in U.S. patent 3,373,650 and U.S. patent 3,390,606.               Such sensors include a pair of counter-propagating laser beams traveling along an optical closed-loop path including a plurality of mirrors.  In order to obtain useful information, a small percentage of the counter-propagating laser beams is allowed to pass through one of the mirrors.  The light beams are passed through a prism which combines the beams at slightly different angles and thereby creates a fringe pattern across a surface containing two photodetectors such as photosensitive diodes, each photodetector being much smaller than an individual fringe.  Usually the photodectors are separated by one quarter of a fringe spacing so as to provide readout output signals in phase quadrature. When the ring laser is rotated about its input axis, the counter-propagating beam frequencies change slightly, one increasing and the other decreasing. The difference in beam frequencies results in a beat frequency which is indicated by the rate of movement of the fringe pattern across the photodetectors. The photodetector outputs are fed into a logic circuit to count the number of fringes passing across the photodetector. The number of fringes passing each detector is directly related to the actual angular rotation of the sensor. The two detector output signals are compared to ascertain sensor rotation direction.

The prism optics of the readout determines the angle between the beams which directly forms the interference fringe pattern and the fringe spacing. In the prior art, the prism optics results in an angle between the beams in the order of 25 arc seconds and produces only a single fringe. Two photodetectors are used which have photosensitive areas which are less than the width of a fringe spacing and the two photodetectors are separated by approximately one quarter width of a fringe spacing. To accurately achieve this arrangement, 'the angle between the beams which produce the fringe pattern must be held to tight tolerances.

Therefore, it is the object of the present invention to devise a readout apparatus which allows a greater tolerance of the angle between the beams and therefore reduces the cost of the optical system.

This object is achieved according to the characterizing features of the independent claims. Further advantageous embodiments of the readout apparatus may be taken from the subclaims.

According to the invention two photodetectors are arranged to monitor the intensity of a plurality of the same fringes of an interference pattern output of a ring laser angular rate sensor. Each of the photodetectors comprise a periodic pattern of a plurality of photosensitive zones and nonphotosensitive zones. The periodic pattern of photosensitive zones of the photodetectors are offset relative to one another by a fraction of the period of the periodic pattern so as to produce intensity output signals which are out of phase with respect to each other in the presence of sensor rotation. The readout of the present invention allows a greater tolerance of the angle between the beams thereby dramatically lowering the cost of an otherwise expensive optical system.

With respect to the figures of the attached drawings the readout apparatus shall be further described, where

Figure 1 is an illustration of a ring laser readout system for generating an interference fringe pattern.

Figure 2 is a diagramatic representation of a dual photodetector readout of the present invention.

Figure 3 is an example of a periodic mask pattern.

Figure 4 is another example of a periodic mask pattern.

Figure 1 illustrates an optical system for producing an interference fringe pattern resulting from the combining of a portion of each of the laser beams in a ring laser angular rate sensor. Figure 1 shows only one of the reflection surfaces which defines in part the optical closed-loop path of a ring laser angular rate sensor. Sensor block 10 is of the type shown and described in U.S. patent 3,390,606.

Fixed to block 10 is mirror/readout prism 12 including substrate 110 for transmitting light. Substrate 110 includes a first major surface 111 suitably polished and optically coated to provide a partially transmissive mirror 14 for reflecting a major portion of beam 16 impinging thereon in a direction opposite of beam 15. Similarly, mirror 14 reflects major portion of beam 15 in the opposite direction of beam 16 in a well known manner so as to provide counter-propagating laser beams within block

10. The angle between beams 15 and 16 depends upon the optical close-loop path chosen, i.e. triangular (60 degrees), rectangular (90 degrees), and the like.

Substrate 110 further includes a second surface 115 suitably polished and optically coated for providing a mirror surface 18. Mirror 18 is positionally located so as to reflect that portion of beam 16 transmitted through mirror 14. Substrate 110 is constructed such that the surface 115 is at a selected angle relative to surface 111 to select the angle between the incident and reflected beams at the surface of mirror 18. The angle between the incident and reflected beams is herein referred to as the "beam angle".

In turn, the reflected beam from mirror 18 is reflected from mirror 14 so as to travel at a slight angle relative to that portion of beam 15 transmitted through mirror 14. This latter mentioned angle is substantially equal to the aforementioned "beam angle". The transmitted portion of beam 15 through mirror 14 and the doublely reflected portion of beam 16 arrive at transmissive surface 116 so as to form an interference fringe pattern on the surface thereof.

The "beam angle" between the incident and the reflected beams at the surface of mirror 18 substantially determines the interference pattern at the surface 116 of substrate 110. As the angle increases therebetween, the fringe spacing of the interference fringe pattern at the surface 116 decreases. In the prior art, the beam angle between the incident and reflected beams would be in the order of 25 arc seconds thereby establishing a relatively large fringe spacing. In the present invention, it is desirable to have a beam angle to minimize directing the reflected beam from mirror 18 back into the block 10 in the opposite direction of beam 16 to avoid lock-in; and large enough to create a discernable plurality of interference fringes. This criteria is met when the beam angle is in the order of 1 to 60 arc minutes. A choice of 20 to 40 arc minutes provides a reasonable number of interference fringes in a relatively small space relative to the photodetectors as will be subsequently described.

Also shown in Figure 1 is a dual photodetector sensor 25 coupled to surface 116 for being responsive to the interference fringe pattern passing therethrough. Although in the preferred embodiment, sensor 25 is ridgedly secured to surface 116, sensor 25 may be spatially removed from surface 116 but still be responsive to the interference fringe patterns transmitted through surface 116.

In Figure 2, thereshown is dual photodetector sensor 25 comprised of a first photodetector 201 having, by way of illustration, a rectangular photosensitive area on substrate 200. Also shown is a second photodetector 221 having a rectangular photosensitive area similar to that of photodetector 201. Photodetectors 201 and 221 are electrically isolated from one another and shown to have substantially equal photosensitive areas. Photodetectors 201 and 221 are positioned at the surface 116 to be responsive to a plurality of the same interference fringes of the interference fringe pattern. Photodetector 201 is constructed to have a periodic pattern of photosensitive and nonphotosensitive zones. This may be achieved by masking photodetector 201 with a periodic mask pattern of transparent and opaque areas. That is, the pattern is repetitive having a fixed displacement period across the photosensitive areas of photodetector 201. By way of example, the illustration in Figure 2 shows parallel dark bands 204 and transparent bands 206 such that photodetector 201 is responsive only to light impinging on photosensitive areas below the transparent zones 206.

As illustrated in Figure 2, associated with the periodic pattern is a "pattern axis" defined as an axis parallel to the direction of the periodicity of the pattern. The pattern axis is shown in Figure 2 parallel with axis "d" and perpendicular to the fringes.

In a similar manner, photodetector 221 is provided with a periodic mask pattern substantially identical to that of photodetector 201. Photodetector 221 is masked so as to have parallel dark bands 224 and transparent bands 226 such that photodetector 221 is responsive only to light impinging on photosensitive areas below the transparent zones 226. The pattern axis of each periodic pattern for each of the photodetectors are designed to be in parallel.

In Figure 2, directly above and below the illustration of the dual photodetectors is a graphical representation of an interference fringe pattern plotting intensity (I) versus spatial position (d) laterally across the photosensitive areas 201 and 221. As illustrated in Figures 1 and 2, the dual photodetector sensor 25 is positioned relative to the interference fringe pattern produced on surface 22 such that the angle between the pattern axis of the patterns of each photodetector are at substantially the same angle relative to the interference fringes of the interference fringe pattern. In the embodiment illustrated in Figure 2, the interference fringes are perpendicular to pattern axis of the pattern. Specifically, the parallel masked bands on photodetectors 201 and 221 are parallel to the fringes. Further, the photodetectors are intended to be substantially within the pattern created by beams.

It is paramount in understanding the present invention that at any spatial position "d" the interference fringe pattern intensity presented to both photosensitive areas of photodetectors 201 and 221 is uniformly equal. This is so since the pattern created by the laser beam spots will have uniform intensity for all points in a line and parallel with the fringes. It should be also understood that the interference fringe pattern moves laterally across the detectors, in parallel with the pattern axis of the periodic pattern, as a function of sensor rotation.

In a preferred embodiment, the periodic mask pattern of photodetector 201 is offset relative to the periodic mask pattern of photodetector 221 by one quarter of a fringe spacing and in a direction parallel to the axes of symmetry of the patterns. In the example illustrated in Figure 2, masked dark line portions 204 and 224 are separated by one fringe spacing, and the width of the photosensitive zones and the dark lines are substantially equal to one half of a fringe spacing. Further, masked dark

lines 204 are offset relative to dark lines 224 by approximately one quarter of a fringe spacing.

Photodetectors 201 and 221 have an output signal representative of the integrated intensity of light impinging on the photosensitive areas exposed to the interference fringe pattern thereof. Such output signals and connection means are not shown in Figure 1. In the absence of dark lines 204 and 224, the output signals of photodetectors 201 and 221 will be substantially equal since they would be responsive to the same fringes of the interference fringe pattern. However, with the masked dark lines 204 and 224 in place, the two photosensitive areas have output signals which are out of phase with one another as will now be described.

Photodetector 201 responds to portions of several fringes of the interference fringe pattern illustrated by intensity pattern 240. The hatch-line portions of intensity pattern 240 illustrate those portions of the fringes which impinge on photosensitive zones 206. The hatch-line portions of intensity pattern 250 illustrate those portions of the same fringes which impinge on photosensitive zones 226 of photodetector 221. Since the dark lines 204 and 224 are offset by one quarter of a fringe spacing, the output intensity signals of photosensitive areas 201 and 221 are out of phase with one another and will be substantially in phase quadrature.

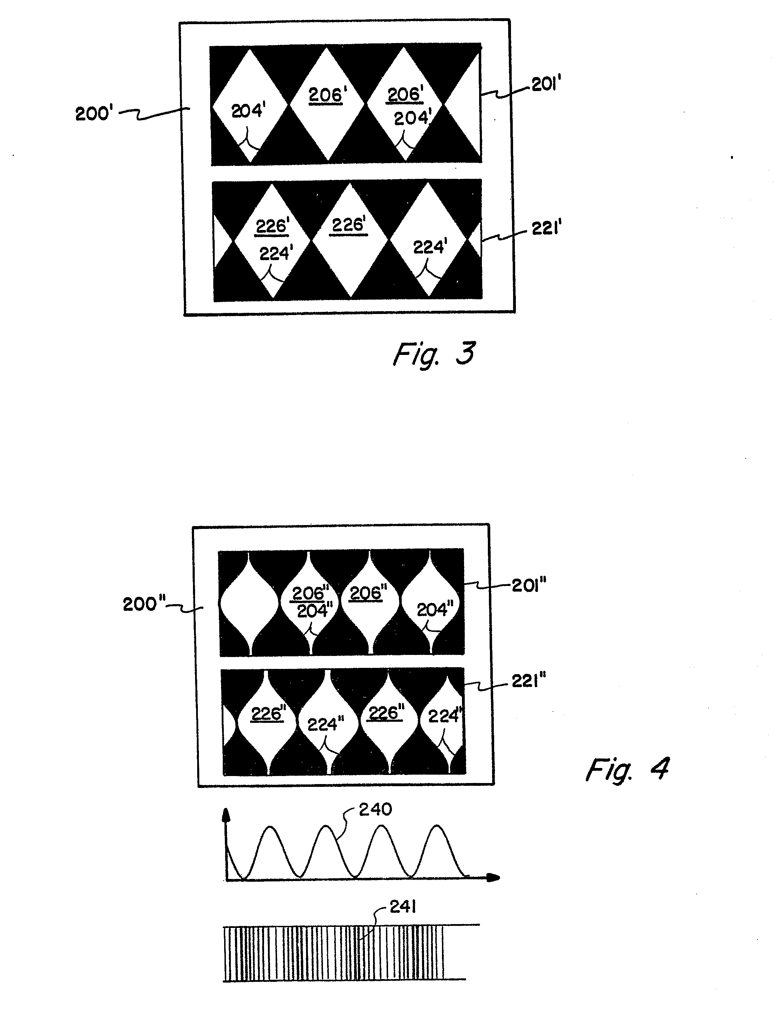

Figures 3 and 4 show further examples of periodic mask patterns which may be used with photodetectors 201 and 221 to provide the intended function as already described. In Figure 3, triangle shaped masked opaque zones are indicated by numerals 204' and 224', and diamond shaped photosensitive zones are indicated by numerals 206' and 226'. Similarly, in Figure 4, thereshown is another arrangement having a somewhat sinusuidal shaped periodic mask pattern for photodetectors 201 and 221 including opaque zones 204'' and 224'', and photosensitive zones 206'' and 226''.

Like Figure 2, the periodic mask patterns in both Figures 3 and 4 are interposed between the photodetector photosensitive areas and the interference fringe pattern. The mask patterns of photodetectors 201 and 221 are offset relative to one another by a fraction of the displacement period of the periodic pattern. Desirably the patterns are offset by one quarter of the period of the periodic pattern, and the period is desirably equal to the fringe spacing.

Below the pattern of Figure 4 is an intensity vs. distance profile 240 representative of photodetectors 201 and 221 of Figure 4. This profile may be provided by a periodic mask pattern consisting of a periodic pattern of shaded areas 241 as an alternative to periodic mask patterns of opaque and transparent zones. As before, the periodic patterns of shaded zones of the two photodetectors should be offset relative to one another to obtain the desired out of phase photodetector output signal.

In accordance with the invention, any periodic mask pattern which causes the photodetector output signal to periodically vary as a function of the periodic movement of the interference fringe pattern is within the scope of the present invention.

It should be recognized by those skilled in the art that a pair of signals out of phase with one another is sufficient for subsequent ring laser angular rate sensor readout electronics for determining both angular rotation, rate, and direction in a well known manner.

It should be recognized by those skilled in the art that the dual photodetector sensor 25 including photodetectors 201 and 221 and accompanying masks having the intended output maybe manufactured by a variety of techniques. The example illustrated in Figure 2 is one in which the photosensitive area of each photodetector is masked by a material which permits only unmasked or selected photosensitive zones to be responsive to impinging light. Alternatively, the resulting photosensitive zones may be, by way of example, a serpentine pattern of photosensitive areas. Further, another alternative may comprise a semiconductor comprising a plurality of photosensitive zones interconnected within the body of the semiconductor.

Thus, there are many combinations of a dual photodetector sensor 25 and mirror/readout reflector 12 which provide the intended function in a low cost manner. Namely, the dual photodetector sensor 25 may be an integrated circuit which can be optically cemented, and the like, to the surface 116 for obtaining the intended signals. On the other hand, surface 116 may be optically coated to provide the mask on the surface 116 and the dual sensor may then be optically cemented above the mask.

The combination set forth by the present invention sets forth a unitary mirror/readout reflector and dual photodetector system which is easily aligned and allows for greater flexiblity and tolerances in the manufacturing process. A combination of these elements allows a low cost and lightweight design for ring laser angular rate sensors.

It should also be noted that although the diagram illustrated in Figure 1 shows beam angles normally associated with triangular lasers, the principles of the invention are applicable to ring laser angular rate sensors having greater than three sides including four, five, and the like.

Claims:

1. A readout apparatus for a laser angular rate sensor having counter-propagating laser beams (15, 16) which exhibit a change in frequency dependent upon rotation rate and direction, c h a r a c t e r i z e d   b y:
means (110) for optically combining a portion of each of said beams to form an interference fringe pattern (240) having a plurality of fringes;
first photosensitive means (201) having a periodic pattern (204, 206) of photosensitive zones for providing an output signal representative of the intensity of said interference fringe pattern impinging thereon;
second photosensitive means (221) having a periodic pattern (224, 226) of photosensitive zones substantially identical to said first photosensitive means for providing an output signal representative of the intensity of said interference fringe pattern impinging thereon; and
said first and second photosensitive means being positioned so as to be responsive to portions, of at least two of the same fringes of said interference fringe pattern, said periodic pattern of said photosensitive zones of said first and second photosensitive means each having a pattern axis in parallel with the direction of periodicity of the pattern, said pattern axis being at a selected angle relative to said interference fringes and said patterns being offset by a preselected fraction of the period of said periodic pattern in a direction parallel to said pattern axis.

2. Apparatus   according to claim 1,  c h a r a c t e r - i z e d   i n   t h a t   said first and second photosensitive means (201, 221) each include a photosensitive area having parallel masked and unmasked zones (204, 224; 206, 226).

3. A readout apparatus for a laser angular rate sensor having counter-propagating laser beams (15, 16) which

- 16 -

0201853

exhibit a change in frequency dependent upon rotation rate and direction, c h a r a c t e r i z e d b y means (110) for optically combining a portion of each of said beams to produce an interference fringe pattern (240) having a plurality of fringes;

first and second photosensitive means (201, 221) each having a photosensitive area for responding to said fringe pattern and providing an output signal representative of the intensity of any portion of said interference fringe pattern impinging thereon, said first and second photosensitive means positioned so as to be responsive to portions of at least two of the same fringes of said interference fringe pattern;

means (204, 206, 224, 226) for masking portions of said photosensitive areas of said first and second photosensitive means with first and second periodic mask patterns, respectively, said first and second mask patterns being substantially identical; and

said first and second periodic mask patterns (204, 206; 224, 226) being interposed between said first and second photosensitive means (201, 221) and said interference fringe pattern (240).

4. Apparatus according to claim 3, c h a r a c t e r - i z e d i n t h a t each of said periodic mask patterns (204, 206; 224, 226) have a pattern axis in parallel with the direction of periodicity of the pattern, said pattern axis being parallel to each other and at substantially the same angle relative to said interference fringe pattern fringes and said first mask pattern is offset relative to said second mask pattern by a fraction of a period of said first periodic mask pattern in a direction parallel with said pattern axis.

5. Apparatus according to claim 3, c h a r a c t e r - i z e d i n t h a t said periodic mask pattern is a plurality of parallel opaque lines (204, 224) in parallel with said interference fringe pattern.

6.  Apparatus according to claim 3, c h a r a c t e r - i z e d   i n   t h a t  said periodic pattern has a period substantially equal to the period of said interference fringe pattern.

7.  Apparatus according to claim 6, c h a r a c t e r - i z e d   i n   t h a t  said periodic pattern is a plurality of parallel opaque lines having a width substantially equal to one half of the period of said period pattern.

## Fig. 1

DUAL
SENSOR

25

115
18
22
116
20
12
110
111
10
15
16
14

.25"

## Fig. 2

I

240

d

200

201

204
206
206

λ/4

221

224
226
226

PATTERN
AXIS

λ/2

I

250

d

λ

*Fig. 3*

*Fig. 4*